# EUROPEAN PATENT APPLICATION

(11) **EP 2 913 771 A1**
(43) Date of publication of application: **02.09.2015**
(21) Application number: 15156624.7
(22) Date of filing: 25.02.2015
(51) Int. Cl.: G06F 21/10, H04L 29/08

(54) **Cluster license server**

(30) Priority: 26.02.2014 US 201461944807 P
(71) Applicant: Services Petroliers Schlumberger SA, 75007 Paris (FR); Logined B.V., 2586 BJ S Gravenhage (NL)
(72) Inventor: Chowdhury, Asim, Sugar Land, TX 77479 (US)
(74) Representative: Li, Boxi

(57) **Abstract**

The present invention is directed to devices, systems, methods, and non-transitory computer-readable media for a license server system. In one embodiment, a system may include a primary license server and a failover license server. The system may further include a cluster license server configured to switch from receiving license information from the primary license server to receiving license information from the failover license server upon failure of the primary license server.

## Description

### TECHNICAL FIELD

This disclosure relates generally to license servers and, more specifically, to devices, systems, methods, and computer-readable media for providing license services to one or more application programs via a cluster license server.

### BRIEF SUMMARY OF THE INVENTION

In one specific embodiment, a system may include a first license server comprising license data and a second license server comprising license data substantially identical to the license data on the first license server. The license data may comprise one or more license files. The system may also include a common license server configured to receive license data from the first license server and the second license server and convey the license data to at least one application program.

In another embodiment, a device may include a primary license server and a failover license server. In addition, the device may include a cluster license server configured to switch from receiving license information from the primary license server to receiving license information from the failover license server upon failure of the primary license server.

According to other embodiments, the present disclosure includes methods for providing license services. Various embodiments of such a method may include receiving license information from one of a plurality of license servers at a cluster license server. The method may also include conveying the license information from the cluster server to one or more application programs. Additionally, the method may include detecting a failure of the one license server. Moreover, the method may include receiving license information from another license server of the plurality of license servers at the cluster license server in response to the failure of the one license server.

Yet other embodiments of the present invention comprise computer-readable media storage storing instructions that when executed by a processor cause the processor to perform instructions in accordance with one or more embodiments described herein.

It will be appreciated that the foregoing summary is merely intended to introduce a subset of the subject matter discussed below and is, therefore, not limiting. Further, other aspects, as well as features and advantages of various aspects, of the present invention will become apparent to those of skill in the art through consideration of the ensuing description, the accompanying drawings and the appended claims.

### BRIEF DESCRIPTION OF THE DRAWINGS

FIG. 1A illustrates a system including a license server system, in accordance with an embodiment of the present disclosure;
FIG. 1B is another illustration of a system including a license server system, according to an embodiment of the present disclosure;
FIG. 2 is a flowchart depicting another method, according to an embodiment of the present disclosure; and
FIG. 3 illustrates a system, in accordance with an embodiment of the present disclosure.

### DETAILED DESCRIPTION

Referring in general to the accompanying drawings, various embodiments of the present invention are illustrated to show the structure and methods for a license server system. Common elements of the illustrated embodiments are designated with like numerals. It should be understood that the figures presented are not meant to be illustrative of actual views of any particular portion of the actual device structure, but are merely schematic representations which are employed to more clearly and fully depict embodiments of the disclosure.

The following provides a more detailed description of the present disclosure and various representative embodiments thereof. In this description, functions may be shown in block diagram form in order not to obscure the present invention in unnecessary detail. Additionally, block definitions and partitioning of logic between various blocks is exemplary of a specific implementation. It will be readily apparent to one of ordinary skill in the art that the present invention may be practiced by numerous other partitioning solutions. For the most part, details concerning timing considerations and the like have been omitted where such details are not necessary to obtain a complete understanding of the present invention and are within the abilities of persons of ordinary skill in the relevant art. While several embodiments and features of the present invention are described herein, modifications, adaptations, and other implementations are possible, without departing from the spirit and scope of the present invention.

As will be understood by a person having ordinary skill in the art, an entity (e.g., a software company) may offer a license to use proprietary application programs (e.g., software). Software can be easy to copy and, thus, an entity may often provide some sort of unique license information (e.g., license key) along with the software. If a user (e.g., a client) does not provide the license key, the software may not function properly.

As will be appreciated by a person having ordinary skill, there are various ways to implement a licensing scheme involving an application program. For example, an application program (e.g., software) on a client's machine may share information with a remote server to verify that the license for the application program on the client's machine is valid. The client's machine and the remote server may communicate information over a network, such as the Internet. Such a specialized remote server that manages the license may be referred to as a license server.

An application program may not function effectively unless a license server is validating a license and, therefore, a license server can be an important component in enforcing license compliance. While this can help protect against unauthorized use of the application program, it also requires a robust license server. Failure of a license server may cause the application program on a client machine, which is relying on licensing information from the license server, to stop functioning until connectivity is restored. Typically, all licensed application programs may not function effectively until a failed license server is brought back online. As such, license server downtime can be expensive in terms of, for example lost productivity, client frustration, loss of reputation, failure to meet service level agreements, and other costs. Thus, it is ideal to have a robust license server and uninterrupted license services.

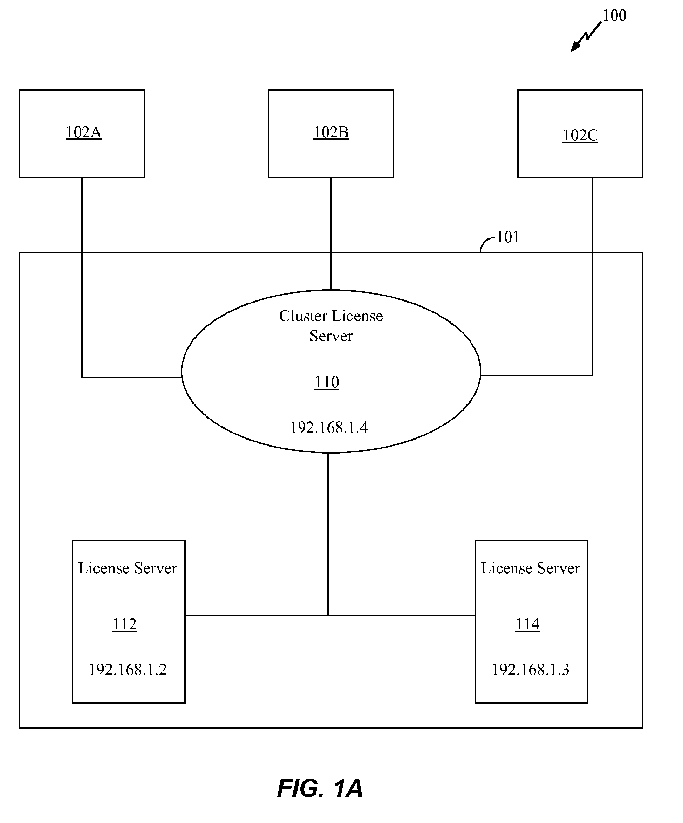

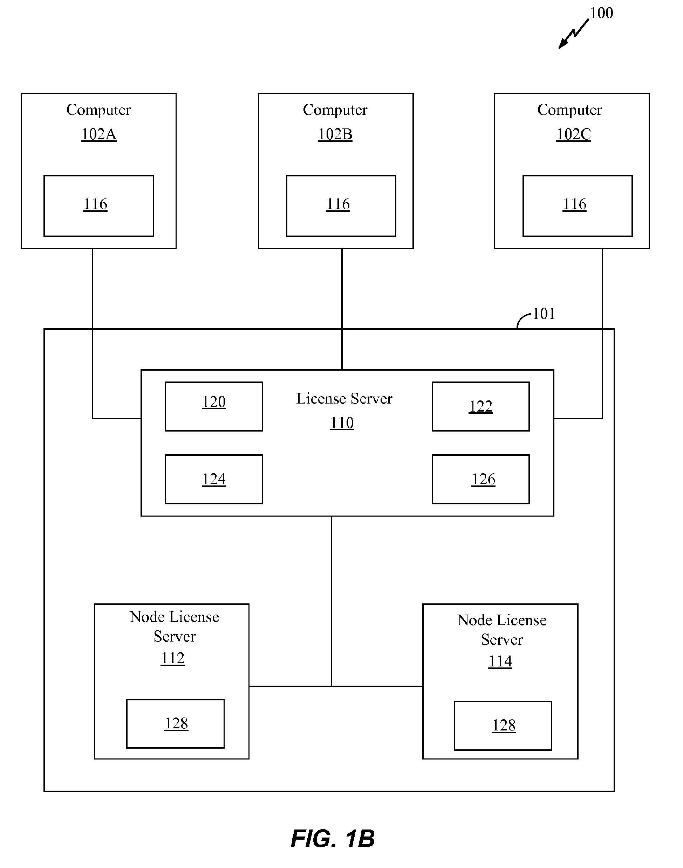

FIGS. 1A and 1B illustrate a system 100 implementing a license server system 101 including a license server 110, in accordance with an embodiment of the present disclosure. License server system 101 may also be referred to herein as device or a product. In addition to license server 110, license server system 101 may include a plurality of license servers (e.g., license server 112 and license server 114). Further, system 100 includes one or more computers 102A-102C. As one example, computers 102A-102C may comprise client computers. It is noted that licenser server 110 may also be referred to herein as a "resilient license server," a "common license server," and a "cluster license server." Further, each of license server 112 and license server 114 may also be referred to herein as a "node" or a "node license server." Although system 100 is illustrated as having two nodes (i.e., license server 112 and license server 114), embodiments of the present disclosure are not so limited. Rather, system 100 may include two or more node license servers.

Each computer 102A-102C may comprise any suitable computing device including desktops, laptops, personal digital assistants, smart phones, tablets, and the like. Each computer 102A-102C is configured to run one or more application programs 116 (e.g., a software program) that requires licensing information from license server 110. Further, each computer 102A-102C may communicatively couple to license server 110 via any suitable communications medium (e.g., the Internet) and any suitable communication link (e.g., wired link, wireless link, or a combination thereof). Although system 100 is illustrated as having three computers (i.e., computers 102A-102C), embodiments of the present disclosure are not so limited. Rather, system 100 may include any number of computers.

As will be appreciated in view of the description herein, license server system 101, and more specifically license server 110, may limit, and possibly prevent, failures of system 100, even if license server 112 or license server 114 were to fail. Thus, computers 102A-102C may not be negatively impacted in the event either license server 112 or license server 114 was to fail. In one embodiment, each of license servers 112 and 114 may comprise a CentOS based Linux server configured with clustering software that run an individual IP address. In the embodiment depicted in FIG. 1, license server 112 may have an IP address (e.g., IP address 198.168.1.2 as depicted in FIG. 1) and license server 114 may have another, different IP address (e.g., IP address 198.168.1.3 as depicted in FIG. 1).

Further, license server 110 may include yet another IP address (e.g., IP address 192.168.1.4, as depicted in FIG. 1). In one embodiment, license server 110 may include a cluster resource manager (e.g., Pacemaker) 120, a cluster engine (e.g., Corosync cluster engine) 122, a license manager (e.g., FlexLM software license manager from Flexera® Software) 124, one or more daemons 126 for managing one or more licenses, or any combination thereof. License server 112 and license server 114 may each be configured as cluster nodes running license services with identical, or substantially identical, license data 128. More specifically, licensing programs (e.g., software) and daemons (i.e., on license servers 112 and 114) may run identical, or substantially identical, license data 128. By way of example only, license data 128 may comprise any license information, such as one or more license files.

In various embodiments, one of license servers 112 and 114 may serve license information to an application program on a client computer 102A-102C at any given time through license server 110. More specifically, one or more application programs on computers 102A-102C may be configured to validate a license by accessing a cluster IP address (in the example of FIG. 1, IP address 192.168.1.4) of license server 110 as opposed to either IP address of license servers 112 and 114. In some embodiments, the existence of license servers 112 and 114 may be transparent to application programs on computers 102A-102C. Stated another way, it is not required for the one or more application programs 116 (i.e., on a computer 102A-102C) to access, or even be aware of, either license server 112 or license server 114. As a result, individual node failures (i.e., a failure of license server 112 or license server 114) may not cause an application program 116 running on any of computers 102A-102C to stop functioning effectively. In one embodiment, license server 112 may comprise function as a primary license server for providing license information and license server 114 may function as a failover license server. In other embodiments, license servers 112 and 114 may alternate responsibility for providing the license information through license server 110.

During a contemplated operation, one or more application programs 116 running on computers 102A-102C may validate licenses by accessing license 110. In one embodiment, when a license server providing license information (e.g., license server 112) fails, the other license server (e.g., license server 114) may substantially automatically begin serving license information. As will be appreciated, failure of a license server may be the result of hardware failure, software failure, a planned outage, connectivity failures, or other event that prevents the license server from serving license information. Upon failure of a license server serving license information (e.g., license server 112), license server 110 may determine that it is no longer receiving license information from the license server and substantially immediately switch ("failover switch") to another license server (e.g., license server 114). A failover switch may happen with sufficient speed so that application programs 116 on client computers 102A-C may not detect a failure. As such, the failure may be undetected by application programs 116 on computers 102A-102C and operation thereof may be unaffected by the failure. As will be appreciated, failure of a node license server (e.g., license server 112) may not cause an application program 116 running on a user's (e.g., client's) computer to stop functioning.

As will be understood, license server 110 may be configured to provide high availability of license information to an application program on computers 102A-102C. In addition, in certain embodiments, an application program 116 and persons responsible for configuring the connection between application program 116 (i.e., on a client computing device) and resilient license server 110 need only know one cluster IP address (i.e., an IP address of license server 110) or hostname for license server system 101. License server 110 may also facilitate routine license addition and deletion operations without bringing down license server system 101. Further, license server 110 may be configured for both file-based licenses and dongle-based licenses.

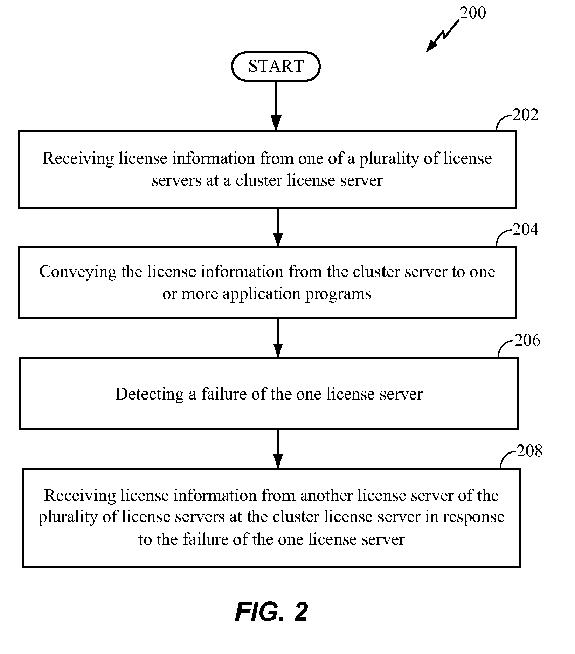

FIG. 2 is a flowchart of a method 200, according to an embodiment of the present disclosure. Method 200 may include receiving license information from one of a plurality of license servers at a cluster license server (depicted by act 202). For example, with reference to FIGS. 1A and 1B, license server 110 may receive license information from node license server 110. Method 200 may further include conveying the license information from the cluster license server to one or more application programs (depicted by act 204). As an example, with reference to FIGS. 1A and 1B, license server 110 may convey license information to application program 116 on one or more of computers 202A-202C. In addition, method 200 may include detecting a failure of the one license server (depicted by act 206). For example, license server 110 may detect that node license server 112 (see FIG. 1A and/or 1B) has failed. Moreover, method 200 may include receiving license information from another license server of the plurality of license servers at the cluster license server and in response to the failure of the one license server (depicted by act 208). By way of example, license server 110 (see FIG. 1A and/or 1B) may receive license data from node license server 114 in response to the failure of node license server 112.

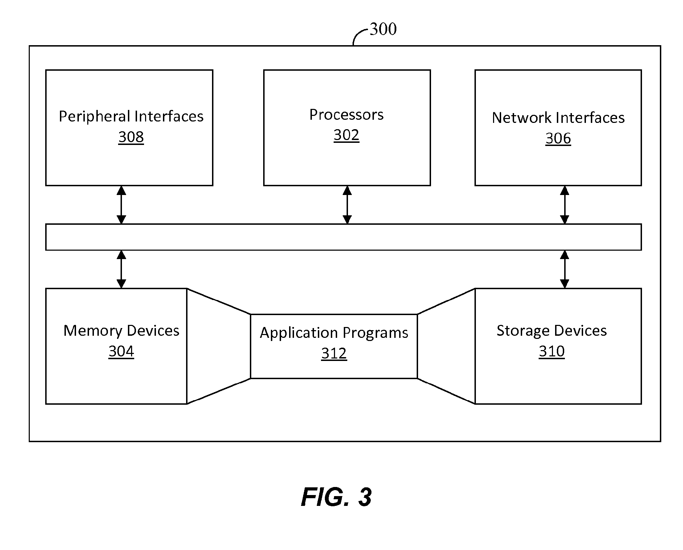

Embodiments of the disclosure may also include one or more systems for implementing one or more embodiments described above. FIG. 3 illustrates a schematic view of such a computing or processor system 300, according to an embodiment of the present disclosure. In one example, system 300 may be provided by the aforementioned licenser server 110, license server 112, license server 114 (see FIG. 1), or any combination thereof. Processor system 300 may include one or more processors 302 of varying core configurations (including multiple cores) and clock frequencies. One or more processors 302 may be operable to execute instructions, apply logic, etc. It will be appreciated that these functions may be provided by multiple processors or multiple cores on a single chip operating in parallel and/or communicably linked together. In at least one embodiment, one or more processors 302 may be or include one or more GPUs.

Processor system 300 may also include a memory system, which may be or include one or more memory devices and/or computer-readable media 304 of varying physical dimensions, accessibility, storage capacities, etc. such as flash drives, hard drives, disks, random access memory, etc., for storing data, such as images, files, and program instructions for execution by processor 302. In an embodiment, computer-readable media 304 may store instructions that, when executed by processor 302, are configured to cause processor system 300 to perform operations. For example, execution of such instructions may cause processor system 300 to implement one or more portions and/or embodiments described above.

Processor system 300 may also include one or more network interfaces 306, which may include any hardware, applications, and/or other software. Accordingly, network interfaces 306 may include Ethernet adapters, wireless transceivers, PCI interfaces, and/or serial network components, for communicating over wired or wireless media using protocols, such as Ethernet, wireless Ethernet, etc.

Processor system 300 may further include one or more peripheral interfaces 308, for communication with a display screen, projector, keyboards, mice, touchpads, sensors, other types of input and/or output peripherals, and/or the like. In some implementations, the components of processor system 300 need not be enclosed within a single enclosure or even located in close proximity to one another, but in other implementations, the components and/or others may be provided in a single enclosure.

Memory device 304 may be physically or logically arranged or configured to store data on one or more storage devices 310. Storage device 310 may include one or more file systems or databases in any suitable format. Storage device 310 may also include one or more application programs 312, which may contain interpretable or executable instructions for performing one or more of the disclosed methods. When requested by processor 302, one or more of the application programs 312, or a portion thereof, may be loaded from storage devices 310 to memory devices 304 for execution by processor 302.

Those skilled in the art will appreciate that the above-described componentry is merely one example of a hardware configuration, as processor system 300 may include any type of hardware components, including any necessary accompanying firmware or software, for performing the disclosed implementations. Processor system 300 may also be implemented in part or in whole by electronic circuit components or processors, such as application-specific integrated circuits (ASICs) or field-programmable gate arrays (FPGAs).

The foregoing description of the present disclosure, along with its associated embodiments and examples, has been presented for purposes of illustration only. It is not exhaustive and does not limit the present disclosure to the precise form disclosed. Those skilled in the art will appreciate from the foregoing description that modifications and variations are possible in light of the above teachings or may be acquired from practicing the disclosed embodiments.

For example, the same techniques described herein with reference to processor system 300 may be used to execute programs according to instructions received from another program or from another processor system altogether. Similarly, commands may be received, executed, and their output returned entirely within the processing and/or memory of processor system 300. Accordingly, neither a visual interface command terminal nor any terminal at all is strictly necessary for performing the described embodiments.

Likewise, the steps described need not be performed in the same sequence discussed or with the same degree of separation. Various steps may be omitted, repeated, combined, or divided, as necessary to achieve the same or similar objectives or enhancements. Accordingly, the present disclosure is not limited to the above-described embodiments, but instead is defined by the appended claims in light of their full scope of equivalents. Further, in the above description and in the below claims, unless specified otherwise, the term "execute" and its variants are to be interpreted as pertaining to any operation of program code or instructions on a device, whether compiled, interpreted, or run using other techniques.

Embodiments of the present disclosure may minimize downtime of an application program and, thus, may improve user (e.g., client) satisfaction. Further, embodiments disclosed herein may not require substantial changes to application programs (e.g., an application program 116 running on computer 102A-102C).

Although the foregoing description contains many specifics, these should not be construed as limiting the scope of the invention or of any of the appended claims, but merely as providing information pertinent to some specific embodiments that may fall within the scopes of the invention and the appended claims. Features from different embodiments may be employed in combination. In addition, other embodiments of the invention may also be devised which lie within the scopes of the invention and the appended claims. The scope of the invention is, therefore, indicated and limited only by the appended claims and their legal equivalents. All additions, deletions and modifications to the invention, as disclosed herein, that fall within the meaning and scopes of the claims are to be embraced by the claims.

## Claims

1. A system, comprising:
a first license server comprising one or more license files;
a second license server comprising one or more license files substantially identical to the one or more licenses files on the first license server; and
a common license server configured to receive license information from the first license server and the second license server and convey the license information to at least one application program.

2. The system of claim 1, wherein one of the first license server and the second license server is a primary license server for the at least one application program and the other license server is a failover license server for the at least one application program.

3. The system of claim 1, further comprising the at least one application program configured to receive license information from the common license server.

4. The system of claim 1, wherein the common license server comprises:
a resource manager;
an engine;
a license manager; and
one or more daemons.

5. The system of claim 1, wherein the common license server is configured to detect failure of either the first license server or the second license server, and upon detection thereof, receive the license information from the other license server.

6. The system of claim 1, wherein each of the first and second license servers are configured as cluster nodes including identical license files.

7. A method, comprising:
receiving license information from one of a plurality of license servers at a cluster license server;
conveying the license information from the cluster server to one or more application programs;
detecting a failure of the one license server; and
receiving license information from another license server of the plurality of license servers at the cluster license server in response to the failure of the one license server.

8. The method of claim 7, wherein receiving license information comprises receiving license information at a cluster license server.

9. The method of claim 7, wherein conveying the license information comprises conveying the license information from the cluster license server.

10. The method of claim 7, wherein detecting a failure comprises determining that the licensing information is not being received from the one license server.

11. The method of claim 7, further comprising validating a license via accessing a cluster IP address of the cluster license server.

12. A product, comprising:
a primary license server;
a failover license server; and
a cluster license server configured to switch from receiving license information from the primary license server to receiving license information from the failover license server upon failure of the primary license server.

13. The product of claim 12, further comprising one or more application programs configured to receive license information from the cluster license server.

14. The product of claim 13, wherein the failure is undetected by each of the one or more application programs.

15. The product of claim 12, wherein the cluster license server includes at least one of:
a cluster resource manager;
a cluster engine;
an application program license manager; and
one or more daemons.
